(19) **Europäisches Patentamt**
**European Patent Office**
**Office européen des brevets**

(11) **EP 1 292 805 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(51) Int Cl.:
*G01B 11/12* (2006.01)     *G01B 11/22* (2006.01)
*G01B 9/02* (2006.01)     *B23Q 17/24* (2006.01)

(21) Anmeldenummer: **01984039.6**

(22) Anmeldetag: **15.06.2001**

(86) Internationale Anmeldenummer:
**PCT/DE2001/002258**

(87) Internationale Veröffentlichungsnummer:
**WO 2001/098732 (27.12.2001 Gazette 2001/52)**

(54) **MESSEINRICHTUNG ZUR ERFASSUNG VON DIMENSIONEN VON PRÜFLINGEN**

MEASURING DEVICE FOR DETECTING THE DIMENSIONS OF TEST SAMPLES

DISPOSITIF DE MESURE DESTINE A LA DETECTION DE DIMENSIONS D'EPROUVETTES

(84) Benannte Vertragsstaaten:
**DE ES FR GB IT SE**

(30) Priorität: **21.06.2000 DE 10029383**

(43) Veröffentlichungstag der Anmeldung:
**19.03.2003 Patentblatt 2003/12**

(73) Patentinhaber: **Komet Group GmbH**
**70565 Stuttgart (DE)**

(72) Erfinder:
• **FRANZ, Stefan**
**70327 Stuttgart (DE)**

• **WINDECKER, Robert**
**76275 Ettlingen (DE)**

(74) Vertreter: **Kohl, Karl-Heinz**
**Patentanwälte**
**Dipl.-Ing. A.K. Jackisch-Kohl**
**Dipl.-Ing. K.H. Kohl**
**Stuttgarter Strasse 115**
**70469 Stuttgart (DE)**

(56) Entgegenhaltungen:
EP-A2- 0 379 226     WO-A-97/32182
DE-A- 3 617 790     DE-A- 19 737 919
US-A- 4 153 370     US-A- 4 561 776
US-A- 5 325 177     US-A- 5 392 122

## Beschreibung

Die Erfindung betrifft ein Werkzeug zur Bearbeitung von Werkstücken nach dem Oberbegriff des Anspruches 1 bzw. 5

Bei der Herstellung von Bohrungen, Passungen und dergleichen in Werkstücken ist es notwendig, dass die Bohrungen genaue Durchmesser haben. Aus diesem Grunde werden die Bohrungen nach dem Bohrvorgang mit entsprechenden Messgeräten vermessen. Stellen sich hierbei Maß- und Genauigkeiten heraus, ist eine Nachbearbeitung erforderlich.

Bei einer bekannten Messeinrichtung (US-A-5 325 177) wird ein interferometrisches Messprinzip eingesetzt. Die Messeinrichtung wird manuell durch Bedienpersonal in eine Bohrung des Werkstückes eingesetzt, um deren Durchmesser zu erfassen. Damit bei der manuellen Messung eine ausreichende Messsicherheit erreicht wird, ist eine aufwändige Sicherheitsschaltung vorgesehen, mit der überprüft wird, ob die Messeinrichtung an der Wandung der zu messenden Bohrung anliegt.

Der Erfindung liegt die Aufgabe zugrunde, das gattungsgemäße Werkzeug so auszubilden, dass eine einfache und dennoch hochgenaue Messung möglich ist.

Diese Aufgabe wird beim gattungsgemäßen Werkzeug erfindungsgemäß mit den kennzeichnenden Merkmalen des Anspruches 1 bzw. 5 gelöst.

Mit dem erfindungsgemäßen Werkzeug nach Anspruch 1 lassen sich die Dimensionen von Prüflingen, beispielsweise von Bohrungen in Werkstücken hochgenau und dennoch einfach erfassen. Da die Messeinrichtung in das Werkzeug integriert ist, kann die Messung automatisiert in einer Werkzeugmaschine vorgenommen werden. Die Lichtquelle der Messeinrichtung sendet einen Strahl aus, der am Strahlteiler in einen Referenzstrahl und in einen Messstrahl aufgeteilt wird. Während der Messstrahl zur Messstelle am Prüfling gelenkt wird, wird der Referenzstrahl zu einem Referenzspiegel gelenkt. Beide Strahlen werden nach ihrer Reflexion an der Messstelle bzw am Referenzspiegel wieder zusammengeführt und dem Empfänger zugeführt. Aufgrund der Überlagerung der Strahlen ergibt sich ein Interferenzkontrast, anhand dessen die gewünschte Aussage über die gemessene Dimension des Prüflings erhalten werden kann. Da der Referenzspiegel und der Empfänger in Bezug auf die optische Achse der Messeinrichtung einen lateralen Versatz aufweist, liegen der Referenzspiegel und der Empfänger somit nicht auf der optischen Achse, sondern sind neben ihr angeordnet. Bei einer solchen Ausbildung kann eine sehr hohe Messgenauigkeit erzielt werden.

Beim Werkzeug nach Anspruch 5 liegt der Strahlteiler geneigt zur optischen Achse der Messeinrichtung. In diesem Falle ist lediglich der Referenzspiegel neben der optischen Achse der Messeinrichtung angeordnet, während die Lichtquelle/oder der Empfänger auf der optischen Achse liegen können.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Fig. 1    in schematischer Darstellung und im Schnitt ein erfindungsgemäßes Werkzeug mit einer Messeinrichtung,

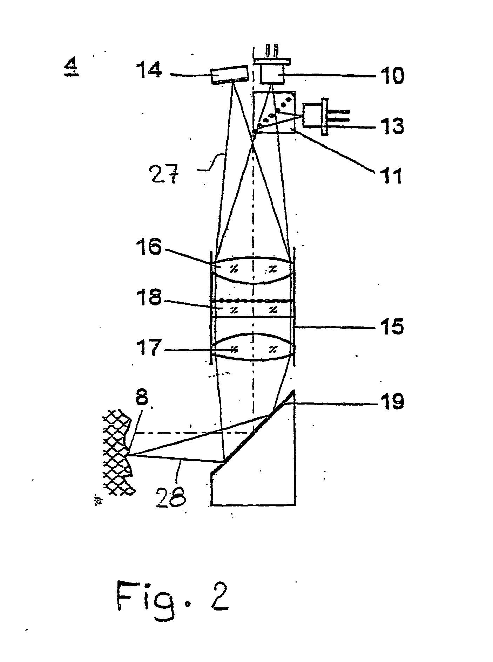

Fig. 2    ein optisches Schema der Messeinrichtung gemäß Fig. 1,

Fig. 3    in schematischer Darstellung die Wirkungsweise der Messeinrichtung,

Fig. 4    ein Messsignal, das mit der Messeinrichtung aufgenommen worden ist,

Fig. 5    ein Informationsflussschema der im erfindungsgemäßen Werkzeug untergebrachten Messeinrichtung.

Mit dem Werkzeug können Dimensionen an Werkstücken, vorzugsweise von Bohrungen, einfach und genau erfaßt werden. Die hierzu vorgesehene Meßeinrichtung ist im Werkzeug untergebracht, das beispielsweise ein Bohr- oder Gewindefräswerkzeug sein kann. Mit der Meßeinrichtung können auch Nutentiefen oder Bohrtiefen in einem Werkstück gemessen werden. Die Messung kann bereits während der Bearbeitung durch das Werkzeug vorgenommen werden. Aufgrund der Messung kann das Werkzeug und/oder das zu bearbeitende Werkstück online bis zum Sollergebnis nachgeführt werden. Das Arbeitsergebnis, beispielsweise die Rundheit einer Bohrung oder deren Durchmesser, wird vorzugsweise unmittelbar während der Bearbeitung gemessen und ausgewertet. Dadurch können sofort Bearbeitungsfehler erkannt und korrigiert werden. Das fertig bearbeitete Werkstück bedarf keiner weiteren Überprüfung mehr. Da eine Korrektur während der Bearbeitung durchgeführt werden kann, ergeben sich sehr kurze Bearbeitungszeiten und vor allem hervorragende Ergebnisqualitäten. Auch die Werkzeuglebensdauer wird optimal ausgenutzt, da infolge der online-Messung und -Auswertung während der Bearbeitung das Werkzeug optimal lange zur Bearbeitung eingesetzt werden kann.

Es ist auch möglich, mit dem Werkzeug die Bearbeitung am Werkstück durchzuführen und unmittelbar anschließend das Bearbeitungsergebnis zu messen und auszuwerten. Entspricht das Bearbeitungsergebnis nicht den gewünschten Anforderungen, wird unmittelbar anschließend die Werkzeug- und/oder Werkstückbewegung im erforderlichen Maße korrigiert und eine Nachbearbeitung durchgeführt.

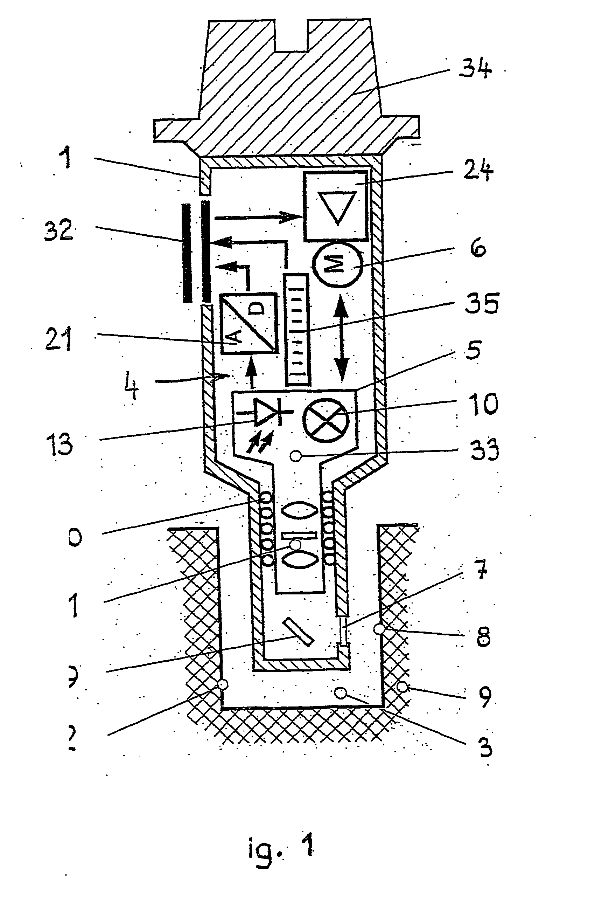

Fig. 1 zeigt in schematischer Darstellung ein Fräswerkzeug 1 mit einem Schaft 34. Mit dem Werkzeug wird in einem Werkstück 2 eine Bohrung 3 in bekannter Weise gefräst. Das Werkzeug 1 ist als Hohlkörper ausgebildet, in dem eine Meßeinrichtung 4 untergebracht ist. Sie hat ein Gehäuse 5, in welchem der größte Teil der Elemente der Meßeinrichtung 4 geschützt untergebracht ist. Sie kann mit einem Linearantrieb 6 in Achsrichtung des Werkzeuges 1 verfahren werden. Das Werkzeug 1 weist nahe dem freien Ende wenigstens ein Fenster 7 auf, durch das in noch zu beschreibender Weise ein Meßstrahl aus dem Werkzeug 1 austreten und an die Meßstelle 8 gelangen kann. Sie ist im dargestellten Ausführungsbeispiel in der Wandung 9 der Bohrung 3 vorgesehen.

Die Meßeinrichtung 4 hat eine Lichtquelle 10, die breitbandig ausgebildet ist und vorteilhaft durch eine LED gebildet wird. Die Lichtquelle 10 kann aber beispielsweise auch eine Halogenlampe, eine Superlumineszenzdiode, eine Laserdiode und dergleichen sein. Ihr nachgeschaltet ist ein Strahlteiler 11, durch den das von der Lichtquelle 10 ausgesandte Licht zu einem Linsensystem 15 umgelenkt wird. Es besteht aus einem Kollimator 16, einem Objektiv 17 und einem dazwischen liegenden Strahlteiler 18. An ihm wird ein Teil des Strahlers zu einem Referenzspiegel 14 reflektiert. Das Linsensystem 15 liegt in der Achse der Meßeinrichtung 4. Der Referenzspiegel 14, die Lichtquelle 10 und der Strahlteiler 11 liegen außerhalb der optischen Achse der Meßeinrichtung 4.

Das Linsensystem 15 ist vereinfacht dargestellt. Der Strahlengang innerhalb des Linsensystems 15 kann von der optischen Achse abweichen.

Dem Linsensystem 15 ist ein Umlenkspiegel 19 nachgeschaltet, mit dem der durch den Strahlteiler 18 hindurchgehende Lichtstrahl 28 durch das Fenster 7 im Werkzeug 1 zur Meßstelle 8 in der Bohrungswandung 9 gelenkt wird.

Wie Fig. 1 zeigt, hat die Meßeinrichtung 4 ein Interferometer 31, das im Gehäuse 5 untergebracht ist. Der Umlenkspiegel 19 befindet sich außerhalb des Gehäuses 5, das über wenigstens ein Linearlager 20 im Werkzeug 1 axial verschiebbar abgestützt ist.

Das von der Lichtquelle 10 ausgesandte Licht wird am Strahlteiler 11 zum Linsensystem 15 abgelenkt. Am Strahlteiler 18 wird ein Lichtstrahl 27 zum Referenzspiegel 14 reflektiert, an dem dieser Lichtstrahl zurück zum Strahlteiler 18 reflektiert wird. Der vom Strahlteiler 18 hindurchgelassene Lichtstrahl 28 wird zum Umlenkspiegel 19 geleitet, der den Lichtstrahl auf die Meßstelle 8 lenkt. Hier wird der Lichtstrahl zurück zum Umlenkspiegel 19 reflektiert. Von ihm aus wird der Lichtstrahl 28 zum Strahlteiler 18 umgelenkt.

Am Strahlteiler 18 werden der vom Referenzspiegel 14 reflektierte Lichtstrahl 27 und der vom Umlenkspiegel 19 kommende Lichtstrahl 28 wieder vereint und einem Empfänger 13 zugeführt. Er ist optoelektronisch ausgebildet, beispielsweise durch eine Fotodiode gebildet. Der Empfänger 13 liegt außerhalb der optischen Achse der Meßeinrichtung 4. Dementsprechend werden die zusammengeführten Lichtstrahlen 27, 28 als Interferenzstrahl am Strahlteiler 11 zum Empfänger 13 umgelenkt.

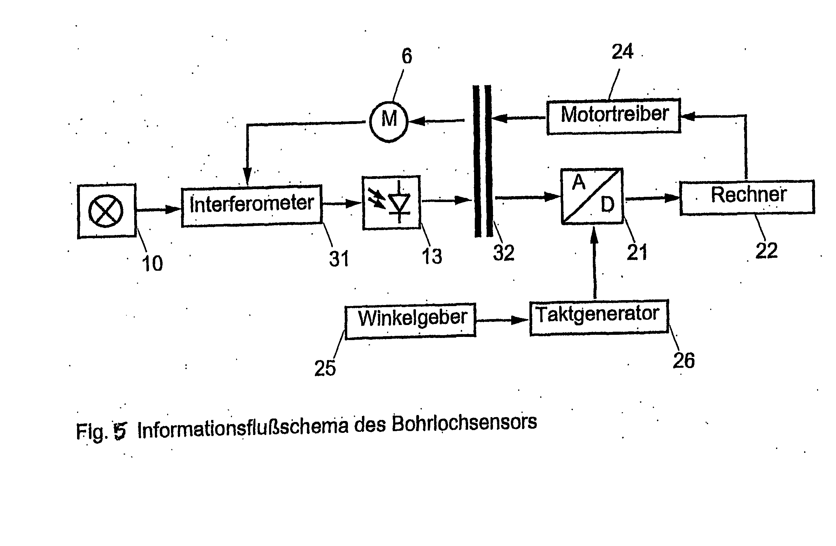

Die vom Empfänger 13 aufgenommenen Lichtstrahlen 27, 28 werden einem Analog/Digital-Wandler 21 zugeführt, dessen gewandelte Digitalsignale durch einen nachfolgenden Rechner 22 (Fig. 5) ausgewertet werden. Die Signalauswertung kann auch auf analogem Wege vorgenommen werden.

Der Empfänger 13 kann auch als intelligentes Fotosensor-Array mit Signalverarbeitung, zum Beispiel mit A/D-Wandlung und/oder Signalverstärkung, ausgebildet sein. Die erhaltenen Signale können dann direkt zum Rechner weitergeleitet werden.

Da die Bohrungswandung 9 über ihren Umfang durch Interferenzmessung gemessen werden soll, wird die das Interferometer 31 aufweisende Meßeinrichtung 4 gedreht. Es ist möglich, die Meßeinrichtung 4 innerhalb des Werkzeuges 1 zu drehen, wobei, jeweils je nach gewünschter Meßgenauigkeit, die Meßeinrichtung 4 um bestimmte Drehwinkel gedreht wird. Anschließend erfolgt die beschriebene Interferenzmessung. Sobald das Meßergebnis im Rechner ausgewertet worden ist, wird die Meßeinrichtung 4 um den nächsten Winkelschritt gedreht. Auf diese Weise kann stufenweise der gesamte Umfang der Bohrungswandung 9 vermessen werden. Für diesen Fall ist eine entsprechende Zahl von Fenstern 7 vorgesehen.

Es ist auch möglich, das gesamte Werkzeug 1 mit der Meßeinrichtung 4 mit konstanter Geschwindigkeit zu drehen und hierbei fortlaufend zu messen.

Der Analog/Digital-Wandler 21 erhält über einen Winkelgeber 25 und einen nachgeschalteten Taktgenerator 26 entsprechende Taktsignale. Auf einen Winkelgeber kann verzichtet werden, wenn die Winkellage oder die Winkelgeschwindigkeit von der Werkzeugmaschine genau vorgegeben werden kann.

Nach einer vollständigen Umdrehung des Werkzeuges 1 oder der Meßeinrichtung 4 wird die Meßeinrichtung mit dem Linearantrieb 6 oder das Werkzeug 1 mittels eines Antriebes der Werkzeugmaschine um ein gewünschtes Maß verschoben, so daß der aus dem Fenster 7 des Werkzeuges 1 austretende Lichtstrahl auf eine andere Umfangsebene der Bohrungswandung 9 trifft. Die Linearverschiebung der Meßeinrichtung 4 bzw. des Interferometers 31 erfolgt über den dem Rechner 22 nachgeschalteten Motor 6 (Fig. 5), der vom Rechner über einen Motortreiber 24 angesteuert wird.

Die vom Linearantrieb 6 erzeugte und im Linearlager 20 geführte Linearbewegung eines Sensorkopfes 33 wird von einem Wegmeßsystem 35 gemessen und auch gesteuert. Das Wegmeßsystem 35 ist im Werkzeug 1 untergebracht. Dann wird in der beschriebenen Weise das Werkzeug 1 und/oder die Meßeinrichtung 4 um ihre Achse gedreht, um die Bohrungswandung 9 in der neuen Axiallage zu vermessen. Auf diese Weise kann die Bohrungswandung 9 über einen Teil ihrer axialen Länge oder auch über ihre gesamte axiale Länge vermessen werden.

In Fig. 5 ist schematisch auch die Datenübertragung vom rotierenden Meßsystem zum feststehenden Rechner 22 dargestellt. Die Daten und Energieübertragung vom rotierenden Meßsystem 4 zum feststehenden Rechner 22 bzw. dem Motortreiber 24 erfolgt bidirektional und wird in bekannter Weise über eine induktive Koppelung 32 mit Sende- und Empfangsteil sowie rotierender und stehender Antenne vorgenommen. Fig. 1 zeigt eine weitere Systemstelle, an der die Kopplung 32 vorgesehen werden kann, nämlich am Schaft des Werkzeuges.

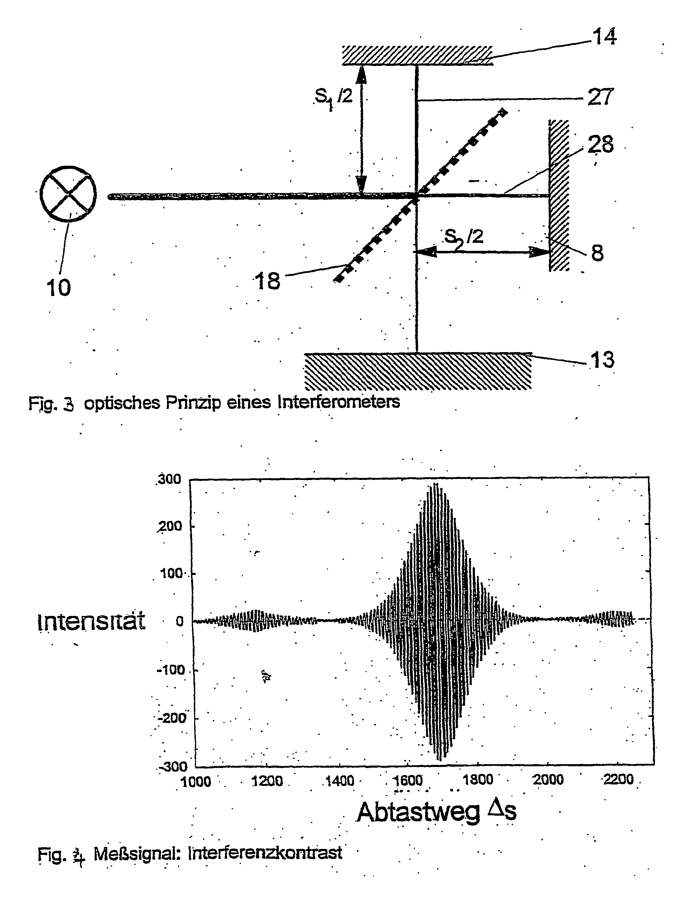

Sofern die Meßstelle 8 beispielsweise auf dem gewünschten Durchmesser liegt, sind die beiden Strahlwege des Referenz- und Meßarms 27, 28 gleich groß. Das Meßsignal, das in Fig. 4 beispielhaft dargestellt ist, weist in diesem Fall ein Maximum auf. Im Diagramm gemäß Fig. 4 ist die Intensität gegen den Weg aufgetragen. Aus der Lage des Maximums des Interferenzkontrastes kann der Radius der Bohrung 9 bestimmt werden. Die Intensität des Meßsignales ergibt sich in bekannter Weise nach folgender Gleichung:

$$I(\Delta s) = I_0 \{1 + m\, \gamma_{21}\, (\Delta s)\, \cos\, (2\pi/\lambda \cdot \Delta s + \varphi)\}$$

Hierbei bedeuten:

m = Modulationsgrad
$\gamma_{21}$ = wechselseitiger Kohärenzgrad
$\lambda$ = mittlere Wellenlänge
$\Delta s$ = optischer Wegunterschied
$\varphi$ = materialabhängiger Phasensprung.

Der Modulationsgrad m ist abhängig von der Lichtintensität und vom Reflexionsgrad. Im Maximum des Interferenzsignals (Fig. 4) beträgt der optische Wegunterschied $\Delta s$ Null. Mit der Meßeinrichtung 4 wird der optische Wegunterschied $\Delta s$ zwischen dem Referenzstrahl 27 und dem Meßstrahl 28 durch Verschieben des Strahlteilers 18 in Richtung des Meßstrahles 28 durchgestimmt und der hierbei erfaßte Interferenzkontrast (Fig. 4) ausgewertet. Weicht die Meßstelle 8 beispielsweise vom gewünschten Durchmesser ab, hat der Meßstrahl 28 eine andere Länge als der konstant lange Referenzstrahl 27. Der Sensorkopf 33 wird über den gesamten Meßbereich verschoben und dabei das Interferenzsignal aufgezeichnet. Anschließend wird das Interferenzmaximum in Abhängigkeit vom Verschiebeweg bestimmt. Daraus läßt sich der Durchmesser der Bohrung bestimmen.

Kleinere Formabweichungen lassen sich durch Verschieben des Referenzspiegels 14 und der Aufzeichnung des zugehörigen Verschiebeweges erfassen. Auch hier wird das Interferenzsignal aufgezeichnet und das Interferenzmaximum in Abhängigkeit vom Verschiebeweg ausgewertet.

Fig. 3 zeigt die prinzipielle Wirkungsweise der Meßeinrichtung 4. Das von der Lichtquelle 10 ausgesandte Licht wird durch den teildurchlässigen Spiegel 18 in den reflektierten Strahl 27 und in den hindurchgehenden Strahl 28 aufgespalten. Der reflektierte Strahl 27 gelangt in der beschriebenen Weise zum Referenzspiegel 14, an dem er wieder zurück zum Teilerspiegel 18 reflektiert wird. Der hindurchgehende Strahl 28 trifft auf die Meßstelle 8, an der er wieder reflektiert wird. Die beiden teilkohärenten Strahlen 27, 28 vereinigen sich wieder am Teilerspiegel 18 und interferieren dabei. Die beiden vereinten Strahlen gelangen dann zum Empfänger 13. Die Auswertung des Interferenzkontrastes ermöglicht eine Auflösung von weniger als 1 $\mu$m.

Bei der beschriebenen Meßeinrichtung 4 liegen die Lichtquelle 10, der Empfänger 13 und der Referenzspiegel 14 nicht auf der optischen Achse der Meßeinrichtung 4, sondern sind durch einen Lateralversatz getrennt. Durch diese Anordnung werden insbesondere Reflexionen zuverlässig vermieden.

Bei einer weiteren (nicht dargestellten) Ausführungsform ist der Strahlteiler 18 schräg gestellt. In diesem Falle liegt lediglich der Referenzspiegel 14 neben der optischen Achse. Die Lichtquelle 10 und der Empfänger 13 können in diesem Falle in der optischen Achse der Meßeinrichtung angeordnet sein.

**Patentansprüche**

1. Werkzeug (1) zur Bearbeitung von Werkstücken (2), mit einem Werkzeugteil, wobei
   in das Werkzeug (1) eine Messeinrichtung (4) zur Erfassung von Dimensionen von Prüflingen, insbesondere von Hohlkörpern, vorzugsweise von Vertiefungen in den Werkstücken (2), integriert ist,
die Messeinrichtung (4) wenigstens eine Lichtquelle (10), einen nachgeschalteten Strahlteiler (18), einen Referenzspielgel (14) und einen Empfänger (13) umfasst,
die Lichtstrahlen der Lichtquelle (10) durch den Strahlteiler (18) in einen Referenzstrahl (27) und einen Messstrahl (28) aufgeteilt werden, von denen der einen Messarm bildende Messstrahl (28) einer Messstelle (8) des Prüflings (2) und der einen Referenzarm bildende Referenzstrahl (27) dem Referenzspiegel (14) zuführbar sind,
die an der Messstelle (8) und am Referenzspiegel (14) reflektierten, zeitlich inkohärenten Strahlen am Strahlteiler (18) wieder zusammengeführt und dem Empfänger (13) zuführbar sind,
und der Referenzspiegel (14) und der Empfänger (13) in Bezug auf die optische Achse der Messeinrichtung (4) einen Lateralversatz aufweisen.

2. Werkzeug nach Anspruch 1,
**dadurch gekennzeichnet, dass** auch die Lichtquelle (10) in Bezug auf die optische Achse der Messeinrichtung (4) einen Lateralversatz aufweist.

3. Werkzeug nach Anspruch 1 oder 2,
**dadurch gekennzeichnet, dass** der Strahlteiler (18) den Referenzstrahl (27) direkt dem Referenzspiegel (14) zuführt.

4. Werkzeug nach einem der Ansprüche 1 bis 3,
**dadurch gekennzeichnet, dass** die Achse des Referenzstrahls (27) im Bereich zwischen dem Strahlteiler (18) und dem Referenzspiegel (14) winklig zur optischen Achse der Messeinrichtung (4) verläuft.

5. Werkzeug (1) zur Bearbeitung von Werkstücken (2), mit einem Werkzeugteil, wobei
in das Werkzeug (1) eine Messeinrichtung (4) zur Erfassung von Dimensionen von Prüflingen, insbesondere von Hohlkörpern, vorzugsweise von Vertiefungen in den Werkstücken (2), integriert ist,
die Messeinrichtung (4) wenigstens eine Lichtquelle (10), einen nachgeschalteten Strahlteiler (18), einen Referenzspiegel (14) und einen Empfänger (13) umfasst,
die Lichtstrahlen der Lichtquelle (10) durch den Strahlteiler (18) in einen Referenzstrahl (27) und einen Messstrahl (28) aufgeteilt werden, von denen der einen Messarm bildende Messstrahl (28) einer Messstelle (8) des Prüflings (2) und der einen Referenzarm bildende Referenzstrahl (27) dem Referenzspiegel (14) zuführbar sind, der seitlich neben der optischen Achse der Messeinrichtung (4) lieg,
die an der Messstelle (8) und am Referenzspiegel (14) reflektierten, zeitlich inkohärenten Strahlen am Strahlteiler (18) wieder zusammengeführt und dem Empfänger (13) zuführbar sind, und
der Strahlteiler (18) geneigt zur optischen Achse der Messeinrichtung (4) angeordnet ist.

6. Werkzeug nach Anspruch 5,
**dadurch gekennzeichnet, dass** die Lichtquelle (10) auf der optischen Achse der Messeinrichtung (4) liegt.

7. Werkzeug nach Anspruch 5 oder 6,
**dadurch gekennzeichnet, dass** der Empfänger (13) auf der optischen Achse der Messeinrichtung (4) liegt.

8. Werkzeug nach einem der Ansprüche 1 bis 7,
**dadurch gekennzeichnet, dass** ein optischer Wegunterschied ($\Delta$s) im Mess- oder im Referenzarm (27, 28) oder in beiden Armen durchstimmbar ist.

9. Werkzeug nach einem der Ansprüche 1 bis 8,
**dadurch gekennzeichnet, dass** der Empfänger (13) an einen Rechner (22) angeschlossen ist, der die Signale des Empfängers (13) auswertet.

10. Werkzeug nach Anspruch 9,
**dadurch gekennzeichnet, dass** zwischen dem Empfänger (13) und dem Rechner (22) ein Analog/Digital-Wandler (21) liegt.

11. Werkzeug nach einem der Ansprüche 1 bis 10,
**dadurch gekennzeichnet, dass** das Werkzeug (1) wenigstens eine Durchtrittsöffnung (7) für den zur Messstelle (8) gelangenden Messstrahl (28) aufweist.

**12.** Werkzeug nach einem der Ansprüche 1 bis 11,
**dadurch gekennzeichnet, dass** die Messeinrichtung (4) um ihre Achse, vorzugsweise innerhalb des Werkzeuges (1), drehbar angetrieben ist.

**13.** Werkzeug nach einem der Ansprüche 1 bis 11,
**dadurch gekennzeichnet, dass** die Messeinrichtung (4) zusammen mit dem Werkzeug (1) drehbar ist.

**14.** Werkzeug nach einem der Ansprüche 1 bis 13,
**dadurch gekennzeichnet, dass** die Messeinrichtung (4) innerhalb des Werkzeuges (1) in einem Gehäuse (5) untergebracht ist.

**15.** Werkzeug nach einem der Ansprüche 1 bis 14,
**dadurch gekennzeichnet, dass** zumindest ein Teil der Messeinrichtung (4) in Richtung ihrer Achse verschiebbar ist.

**16.** Werkzeug nach Anspruch 15,
**dadurch gekennzeichnet, dass** ein Linearantrieb (6) vom Rechner (22) angesteuert wird.

**17.** Werkzeug nach Anspruch 15 oder 16,
**dadurch gekennzeichnet, dass** das Gehäuse (5) der Messeinrichtung (4) innerhalb des Werkzeuges (1) axial verschiebbar ist.

**18.** Werkzeug nach Anspruch 15 oder 16,
**dadurch gekennzeichnet, dass** die Messeinrichtung (4) zusammen mit dem Werkzeug (1) axial verschiebbar ist und dass zur Erfassung des Verschiebeweges der Messeinrichtung (4) ein Wegmesssystem (35) vorgesehen ist.

**19.** Werkzeug nach Anspruch 18,
**dadurch gekennzeichnet, dass** das Wegmesssystem (35) im Werkzeug (1) untergebracht ist.

**Claims**

**1.** A tool (1) for machining workpieces (2), having a tool part,
wherein
a measuring device (4) for determining dimensions of test specimens, in particular of hollow bodies, preferably of cavities in the workpieces (2), is integrated in the tool (1),
the measuring device (4) comprises at least one light source (10), a downstream-connected beam splitter (18), a reference reflector (14) and a receiver (13),
the light beams of the light source (10) are divided by the beam splitter (18) into a reference beam (17) and a measuring beam (28), of which the measuring beam (28), forming a measuring arm, can be supplied to a measuring point (8) of the test specimen (2) and the reference beam (27), forming a reference arm, can be supplied to the reference reflector (14), the temporally incoherent beams, which are reflected at the measuring point (8) and at the reference reflector (14), are brought together again at the beam splitter (18) and can be supplied to the receiver (13), and the reference reflector (14) and the receiver (13) are laterally offset with respect to the optical axis of the measuring device (14).

**2.** A tool according to claim 1, **characterised in that** the light source (10) too is laterally offset with respect to the optical axis of the measuring device (4).

**3.** A tool according to claim 1 or 2, **characterised in that** the beam splitter (18) supplies the reference beam (27) direct to the reference reflector (14).

**4.** A tool according to any one of claims 1 to 3, **characterised in that** the axis of the reference beam (27) in the region between the beam splitter (18) and the reference reflector (14) runs at an angle to the optical axis of the measuring device (4).

**5.** A tool (1) for machining workpieces (2), having a tool part,
wherein
a measuring device (4) for determining dimensions of test specimens, in particular of hollow bodies, preferably of cavities in the workpieces (2), is integrated in the tool (1),

the measuring device (4) comprises at least one light source (10), a downstream-connected beam splitter (18), a reference reflector (14) and a receiver (13),

the light beams of the light source (10) are divided by the beam splitter (18) into a reference beam (27) and a measuring beam (28), of which the measuring beam (28), forming a measuring arm, can be supplied to a measuring point (8) of the test specimen (2) and the reference beam (27), forming a reference arm, can be supplied to the reference reflector (14) lying laterally alongside the optical axis of the measuring device (4),

the temporally incoherent beams, which are reflected at the measuring point (8) and at the reference reflector (14), are brought together again at the beam splitter (18) and can be supplied to the receiver (13), and

the beam splitter (18) is arranged obliquely to the optical axis of the measuring device (4).

6. A tool according to claim 5, **characterised in that** the light source (10) lies on the optical axis of the measuring device (4).

7. A tool according to claim 5 or 6, **characterised in that** the receiver (13) lies on the optical axis of the measuring device (4).

8. A tool according to any one of claims 1 to 7, **characterised in that** an optical path difference ($\Delta$s) can be tuned in the measuring arm or in the reference arm (27, 28), or in both arms.

9. A tool according to any one of claims 1 to 8, **characterised in that** the receiver (13) is connected to a computer (22) which evaluates the signals of the receiver (13).

10. A tool according to claim 9, **characterised in that** an analogue-to-digital converter (21) lies between the receiver (13) and the computer (22).

11. A tool according to any one of claims 1 to 10, **characterised in that** the tool (1) has at least one opening (7) for the measuring beam (28) reaching the measuring point (8).

12. A tool according to any one of claims 1 to 11, **characterised in that** the measuring device (4) is rotatably driven about its axis, preferably within the tool (1).

13. A tool according to any one of claims 1 to 11, **characterised in that** the measuring device (4) is rotatable together with the tool (1).

14. A tool according to any one of claims 1 to 13, **characterised in that** the measuring device (4) is housed within the tool (1), in a housing (5).

15. A tool according to any one of claims 1 to 14, **characterised in that** at least part of the measuring device (4) is displaceable in the direction of the axis of the latter.

16. A tool according to claim 15, **characterised in that** a linear drive (6) is controlled by the computer (22).

17. A tool according to claim 15 or 16, **characterised in that** the housing (5) of the measuring device (4) is axially displaceable within the tool (1).

18. A tool according to claim 15 or 16, **characterised in that** the measuring device (4) is axially displaceable together with the tool (1) and **in that** a distance measuring system (35) is provided to determine the displacement path of the measuring device (4).

19. A tool according to Claim 18, **characterised in that** the distance measuring system (35) is housed in the tool (1).

## Revendications

1. Outil (1) pour l'usinage de pièces d'oeuvre (2), comprenant une partie d'outil et dans lequel un dispositif de mesure (4), qui est destiné à relever des dimensions d'échantillons à contrôler, notamment de corps creux, de préférence de creux dans les pièces d'oeuvre (2), est intégré dans l'outil (1),

le dispositif de mesure (4) englobe au moins une source de lumière (10) et, lui succédant, un diviseur ou séparateur de faisceau (18), un miroir de référence (14) et un récepteur (13),

les rayons lumineux de la source de lumière (10) sont séparés par le séparateur de faisceau (18), en un rayon de référence (27) et un rayon de mesure (28), dont le rayon de mesure (28), qui forme une branche de mesure, peut être transmis à une zone de mesure (8) de l'échantillon à contrôler (2), et le rayon de référence (27), qui forme une branche de référence, peut être transmis au miroir de référence (14),

les rayons réfléchis au niveau de la zone de mesure (8) et du miroir de référence (14), non cohérents temporellement, sont à nouveau réunis au niveau du séparateur de faisceau (18) et peuvent être transmis au récepteur (13),

et le miroir de référence (14) et le récepteur (13) présentent un décalage latéral par rapport à l'axe optique du dispositif de mesure (4).

2.  Outil selon la revendication 1,
    **caractérisé en ce que** la source de lumière (10) également, présente un décalage latéral par rapport à l'axe optique du dispositif de mesure (4).

3.  Outil selon la revendication 1 ou la revendication 2, **caractérisé en ce que** le séparateur de faisceau (18) transmet le rayon de référence (27) directement au miroir de référence (14).

4.  Outil selon l'une des revendications 1 à 3, **caractérisé en ce que** l'axe du rayon de référence (27) s'étend, dans la zone entre le séparateur de faisceau (18) et le miroir de référence (14), de manière à former un angle par rapport à l'axe optique du dispositif de mesure (4).

5.  Outil (1) pour l'usinage de pièces d'oeuvre (2), comprenant une partie d'outil et dans lequel un dispositif de mesure (4), qui est destiné à relever des dimensions d'échantillons à contrôler, notamment de corps creux, de préférence de creux dans les pièces d'oeuvre (2), est intégré dans l'outil (1),

    le dispositif de mesure (4) englobe au moins une source de lumière (10) et, lui succédant, un diviseur ou séparateur de faisceau (18), un miroir de référence (14) et un récepteur (13),

    les rayons lumineux de la source de lumière (10) sont séparés par le séparateur de faisceau (18), en un rayon de référence (27) et un rayon de mesure (28), dont le rayon de mesure (28), qui forme une branche de mesure, peut être transmis à une zone de mesure (8) de l'échantillon à contrôler (2), et le rayon de référence (27), qui forme une branche de référence, peut être transmis au miroir de référence (14) se situant latéralement à côté de l'axe optique du dispositif de mesure (4),

    les rayons réfléchis au niveau de la zone de mesure (8) et du miroir de référence (14), non cohérents temporellement, sont à nouveau réunis au niveau du séparateur de faisceau (18) et peuvent être transmis au récepteur (13),

    et le séparateur de faisceau (18) est agencé de manière oblique par rapport à l'axe optique du dispositif de mesure (4).

6.  Outil selon la revendication 5,
    **caractérisé en ce que** la source de lumière (10) se situe sur l'axe optique du dispositif de mesure (4).

7.  Outil selon la revendication 5 ou la revendication 6,
    **caractérisé en ce que** le récepteur (13) se situe sur l'axe optique du dispositif de mesure (4).

8.  Outil selon l'une des revendications 1 à 7,
    **caractérisé en ce qu'**une différence de parcours optique ($\Delta$s) peut être accordée dans la branche de mesure ou de référence (27, 28) ou dans les deux branches.

9.  Outil selon l'une des revendications 1 à 8,
    **caractérisé en ce que** le récepteur (13) est raccordé à un calculateur (22) qui traite les signaux du récepteur (13).

10. Outil selon la revendication 9,
    **caractérisé en ce qu'**entre le récepteur (13) et le calculateur (22) est placé un convertisseur analogique/numérique (21).

11. Outil selon l'une des revendications 1 à 10,
    **caractérisé en ce que** l'outil (1) présente au moins une ouverture de passage (7) pour le rayon de mesure (28) devant parvenir à la zone de mesure (8).

12. Outil selon l'une des revendications 1 à 11,

**caractérisé en ce que** le dispositif de mesure (4) est entraîné en rotation autour de son axe, de préférence à l'intérieur de l'outil (1).

13. Outil selon l'une des revendications 1 à 11,
   **caractérisé en ce que** le dispositif de mesure (4) est rotatif en commun avec l'outil (1).

14. Outil selon l'une des revendications 1 à 13,
   **caractérisé en ce que** le dispositif de mesure (4) est logé, à l'intérieur de l'outil (1), dans un boitier (5).

15. Outil selon l'une des revendications 1 à 14,
   **caractérisé en ce qu'**au moins une partie du dispositif de mesure (4) peut coulisser dans la direction de son axe.

16. Outil selon la revendication 15,
   **caractérisé en ce qu'**un système d'entraînement linéaire (6) est commandé par le calculateur (22).

17. Outil selon la revendication 15 ou la revendication 16,
   **caractérisé en ce que** le boitier (5) du dispositif de mesure (4) peut coulisser axialement à l'intérieur de l'outil (1).

18. Outil selon la revendication 15 ou la revendication 16,
   **caractérisé en ce que** le dispositif de mesure (4) peut coulisser axialement en commun avec l'outil (1), et **en ce que** pour relever le déplacement de coulissement du dispositif de mesure (4), il est prévu un système de mesure de déplacement (35).

19. Outil selon la revendication 18,
   **caractérisé en ce que** le système de mesure de déplacement (35) est logé dans l'outil (1).

ig. 1

Fig. 2

Fig. 3 optisches Prinzip eines Interferometers

Fig. 4 Meßsignal: Interferenzkontrast

Fig. 5 Informationsflußschema des Bohrlochsensors

EP 1 292 805 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5325177 A